# FASCICULE DE BREVET EUROPEEN

(11) **EP 2 230 149 B1**
(45) Date de publication et mention de la délivrance du brevet: **29.07.2015**
(21) Numéro de dépôt: 10155552.2
(22) Date de dépôt: 04.03.2010
(51) Int. Cl.: B62B 3/02

(54) **Chariot de transport transformable à structure de liaison à deux quadrilatères à géométrie variable**
Umwandelbarer Transportwagen mit einer Anschlussstruktur mit zwei Vierecken mit variabler Geometrie
Transformable transport cart with a connecting structure comprising two variable geometry quadrilaterals

(30) Priorité: 12.03.2009 FR 0951535
(43) Date de publication de la demande: 22.09.2010
(73) Titulaire: Peugeot Citroën Automobiles SA, 78140 Vélizy-Villacoublay (FR)
(72) Inventeur: Herbault, Patrick, 92250, La Garenne Colombes (FR); Neaud, Nicolas, 95100, Argenteuil (FR); Borojeni, Hosseïn, 92190, Meudon (FR); Picard, Olivier, 92300, Levallois Perret (FR); Francillout, Matthieu, 91300, Massy (FR)
(74) Mandataire: Vigand, Régis Louis Michel

(56) Documents cités:
- DE-U1- 20 306 617
- US-A1- 2008 093 827

## Description

L'invention concerne les chariots de transport transformables qui sont utilisés par des personnes pour transporter des charges.

On entend ici par « charge » tout corps pesant, qu'il s'agisse d'une personne, d'un animal, d'un végétal ou d'un objet.

Par ailleurs, on entend ici par « chariot de transport » un système pouvant rouler lorsqu'il est tiré ou poussé et pouvant supporter au moins une charge. Par conséquent, il pourra s'agir d'un « Caddie » (marque déposée), d'une poussette (ou d'un landau), d'une table roulante (définissant éventuellement un établi), ou d'un diable transformable, par exemple.

L'invention concerne plus particulièrement les chariots de transport qui comprennent i) une base de support propre à supporter au moins une charge, ii) des pieds munis chacun d'au moins une roue avant et une roue arrière, et iii) une structure de liaison montée à rotation sur une partie arrière des pieds et sur une partie arrière de la base de support et propre, une fois redressée, à être rétractée, par coulissement, sous la base de support. Un chariot de transport de ce type est notamment décrit dans le document EP 1180463 ou dans le document US-A-2008/093827.

Ce type de chariot de transport a été initialement conçu pour permettre à des personnes de transporter des charges relativement lourdes jusque sur une surface de stockage, comme par exemple un plancher de véhicule automobile (de type break ou utilitaire), tout en laissant ces charges sur la base de support, avec la structure de liaison et les pieds rétractés sous cette base de support, en vue d'un déchargement ultérieur après redéploiement de la structure de liaison et des pieds.

Ce type de chariot de transport est particulièrement avantageux du fait de la rétractation possible de la structure de liaison et des pieds sous la base de support qui permet de réduire très notablement son encombrement. Cependant, il présente un inconvénient pendant la phase de gerbage de la base de support chargée sur une surface de stockage. En effet, lorsque le niveau auquel est située la base de support est sensiblement supérieur au niveau auquel est située la surface de stockage, la personne qui manipule le chariot de transport doit incliner vers l'avant sa base de support afin qu'elle contacte la surface de stockage et qu'elle repose ensuite sur cette dernière. Or, pendant cette opération d'inclinaison, la base de support peut basculer soudainement vers l'avant, de façon incontrôlée, en raison de la charge qu'elle supporte, ce qui provoque une brusque remontée de la structure de support et des pieds et donc un basculement vers la personne qui, en cas de contact, peut lui faire mal, voire même la blesser.

En outre, ce type de chariot de transport ne peut être ni transformé en diable ni utilisé pour transporter des charges en position basse du fait que les roues avant (généralement directionnelles) se retrouvent situées derrière la partie arrière de la base de support et orientées vers le haut (et non vers le bas).

L'invention a donc notamment pour but de remédier à tout ou partie des inconvénients présentés par le type de chariot de transport présenté ci-avant.

Elle propose à cet effet un chariot de transport du type de celui présenté ci-avant et dont la structure de liaison comprend deux montants arrière, comprenant des extrémités inférieure et supérieure montées à rotation sur des axes arrière à un premier niveau respectivement par rapport à la partie arrière des pieds et à la partie arrière de la base de support, et deux montants avant, comprenant des extrémités inférieure et supérieure montées à rotation sur des axes avant à un second niveau, décalé vers l'avant par rapport au premier niveau, respectivement par rapport à la partie arrière des pieds et à la partie arrière de la base de support, les axes arrière de chaque montant arrière définissant avec les axes avant du montant avant associé les quatre sommets (ou coins) d'un quadrilatère (éventuellement de type parallélogramme) à géométrie variable.

Il comprend aussi une poignée avant déployable solidarisée à une partie avant de la base de support.

Le chariot de transport selon l'invention peut comporter d'autres caractéristiques qui peuvent être prises séparément ou en combinaison, et notamment :
- chaque pied peut comprendre un longeron comportant une extrémité arrière, sur laquelle sont montées à rotation l'une des roues arrière et les extrémités inférieures de l'un des montants arrière et de l'un des montants avant, et une extrémité avant, sur laquelle est montée à rotation l'une des roues avant. Dans ce cas, il peut comprendre au moins une traverse munie d'extrémités opposées solidarisées aux longerons ;
   ➢ il peut comprendre une structure de liaison auxiliaire comportant une extrémité inférieure propre à être solidarisée à la traverse et une extrémité supérieure propre à contacter une face inférieure de la base de support, afin de renforcer le support de cette dernière ;
- la poignée avant peut être montée soit à rotation sur la partie avant de la base de support, soit à coulissement sur la partie avant de la base de support ;
- il peut comprendre une poignée arrière solidarisée à une partie arrière de la base de support ;
   ➢ la poignée arrière peut comprendre, d'une part, deux barres comportant chacune une extrémité inférieure, montée à rotation (éventuellement contrôlée) sur la partie arrière de la base de support, et une extrémité supérieure, et d'autre part, une partie de préhension sensiblement en forme de U et montée à rotation (éventuellement contrôlée) sur les extrémités supérieures des barres ;
- la base de support peut comprendre au moins deux flancs latéraux sensiblement parallèles et munis chacun d'un moyen de guidage à l'intérieur duquel peuvent coulisser les montants avant et/ou les montants arrière une fois qu'ils ont été redressés dans le prolongement de la partie arrière de la base de support ;
   ➢ chaque moyen de guidage peut être agencé sous la forme d'une glissière principale. Dans ce cas, la structure de liaison peut comprendre deux glissières auxiliaires agencées chacune de manière à coulisser à l'intérieur de l'une des glissières principales, et à chacune desquelles sont solidarisées les extrémités supérieures de l'un des montants avant et de l'un des montants arrière ;
- la base de support peut être pourvue dans sa partie arrière d'une plaque de retenue sensiblement perpendiculaire à une surface de support ;
- les montants arrière peuvent être agencés sous la forme de câbles tendus ou de tiges semi-rigides et les montants avant peuvent être agencés sous la forme de barres rigides ;
- en variante, les montants arrière et avant peuvent être agencés sous la forme de barres rigides ;
- la structure de liaison peut comprendre au moins une traverse comportant deux extrémités opposées respectivement solidarisées aux deux montants avant ;
- les montants avant et/ou la traverse de la structure de liaison peu(ven)t comprendre des moyens de protection en au moins un endroit choisi d'une face avant ;
- la base de support peut être agencée sous la forme d'un plateau ou bien d'une poutre transversale aux extrémités opposées de laquelle sont montées deux poutres latérales de manière à définir sensiblement un berceau en forme de U propre à recevoir un réceptacle de charge ;
- la base de support peut comprendre au moins un élément coulissant qui est choisi parmi au moins un tiroir et une tablette ;
- il peut comprendre un mécanisme de blocage agencé pour prendre au moins des première et seconde positions dans lesquelles respectivement il autorise et interdit la rotation des roues arrière ;
- il peut comprendre un mécanisme de verrouillage agencé pour prendre au moins des première et seconde positions dans lesquelles il verrouille la structure de liaison respectivement dans une position de circulation sensiblement perpendiculaire à la base de support et dans une position intermédiaire inclinée vers l'arrière d'un angle au moins égal à 80° par rapport à la base de support.

D'autres caractéristiques et avantages de l'invention apparaîtront à l'examen de la description détaillée ci-après, et des dessins annexés, sur lesquels :
- la figure 1 illustre schématiquement, dans une vue en perspective (côté avant), un premier exemple de réalisation d'un chariot de transport selon l'invention en position déployée,
- la figure 2 illustre schématiquement, dans une vue en perspective (côté arrière), le chariot de transport de la figure 1 supportant deux casiers,
- la figure 3 illustre schématiquement, dans une vue en perspective, un exemple de réalisation d'une structure de liaison du chariot de transport de la figure 1,
- la figure 4 illustre schématiquement, dans une vue en perspective (côté avant), un second exemple de réalisation d'un chariot de transport selon l'invention en position déployée,
- la figure 5 illustre schématiquement, dans une vue en perspective, les moyens de blocage situés dans la partie inférieure du chariot de transport de la figure 1,
- les figures 6 à 10 illustrent schématiquement et respectivement cinq étapes successives d'une opération de transfert d'un chariot de transport (du type de celui illustré sur la figure 4) sur une surface de stockage,
- la figure 11 illustre schématiquement, dans une vue en perspective (côté arrière), le chariot de transport de la figure 1 en position totalement repliée de stockage,
- la figure 12 illustre schématiquement, dans une vue en perspective (côté arrière), le chariot de transport de la figure 1 dans une première position partiellement repliée autorisant sa circulation, et supportant deux casiers,
- la figure 13 illustre schématiquement, dans une vue en perspective (côté arrière), le chariot de transport de la figure 1 dans une seconde position partiellement repliée dans lequel il constitue un diable supportant un casier.

Les dessins annexés pourront non seulement servir à compléter l'invention, mais aussi contribuer à sa définition, le cas échéant.

L'invention a pour but d'offrir un chariot de transport transformable (CT) pouvant rouler lorsqu'il est tiré ou poussé et pouvant supporter au moins une charge.

Dans ce qui suit, on considère, à titre d'exemple non limitatif, que les charges sont des objets ou des végétaux. Mais, l'invention n'est pas limitée à ce type de charge. Elle concerne en effet tout type de corps pesant, qu'il s'agisse d'une personne, d'un animal, d'un végétal ou d'un objet.

Par ailleurs, on considère dans ce qui suit, à titre d'exemple non limitatif, que le chariot de transport (CT) est un « Caddie » (marque déposée) qui peut transporter des charges en position haute ou basse et qui peut se transformer en diable. Mais, l'invention n'est pas limitée à ce type de chariot de transport. Elle concerne également les chariots de transport qui constituent des poussettes (ou landaus) et des tables roulantes (définissant éventuellement des établis), par exemple.

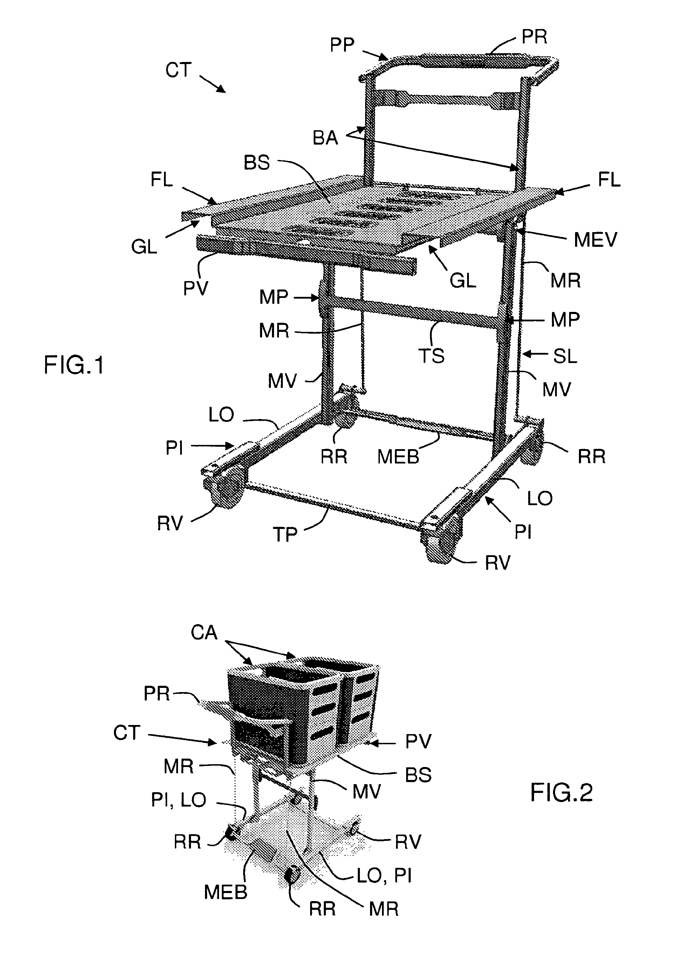

On se réfère tout d'abord aux figures 1 à 3 pour décrire un premier exemple de réalisation, non limitatif, de chariot de transport CT selon l'invention.

Comme illustré, un chariot de transport CT, selon l'invention, comprend au moins une base de support BS, une structure de liaison SL solidarisée à la base de support BS, et des pieds PI solidarisés à la structure de liaison SL.

La base de support BS est agencée de manière à supporter au moins une charge, éventuellement logée dans un casier (ou coffre ou panier) CA (voir figure 2), dont les dimensions sont éventuellement adaptées à ses propres dimensions.

Dans l'exemple non limitatif illustré sur les figures 1, 2 et 11 à 13, la base de support BS est agencée sous la forme d'un plateau comportant une surface de support. Mais, cela n'est pas obligatoire. En effet, dans une variante de réalisation non illustrée, adaptée à une configuration de type panier, poussette ou landau, la base de support BS peut par exemple être agencée sous la forme d'une poutre transversale munie de deux extrémités opposées solidarisées respectivement à deux poutres latérales (ou longitudinales, c'est-à-dire sensiblement perpendiculaires à la poutre transversale) se projetant vers l'avant. La poutre transversale et les deux poutres latérales définissent alors une espèce de berceau dont la forme est sensiblement en U et propre à recevoir un réceptacle de charge, comme par exemple un panier (amovible ou non, vissé ou clipsé, par exemple), un siège d'enfant, une nacelle ou un lit d'enfant. Dans ce cas, le berceau en U peut par exemple comprendre des moyens de fixation, comme par exemple des ergots, destinés à coopérer avec des moyens de fixation complémentaires définis sur le réceptacle de charge. Mais, tout autres types de moyens de fixation peuvent être envisagés pour fixer un réceptacle de charge à la base de support BS (et notamment les vis et les fixations isofix).

De préférence, et comme illustré non limitativement, la base de support BS comprend une poignée arrière PR dans une partie arrière.

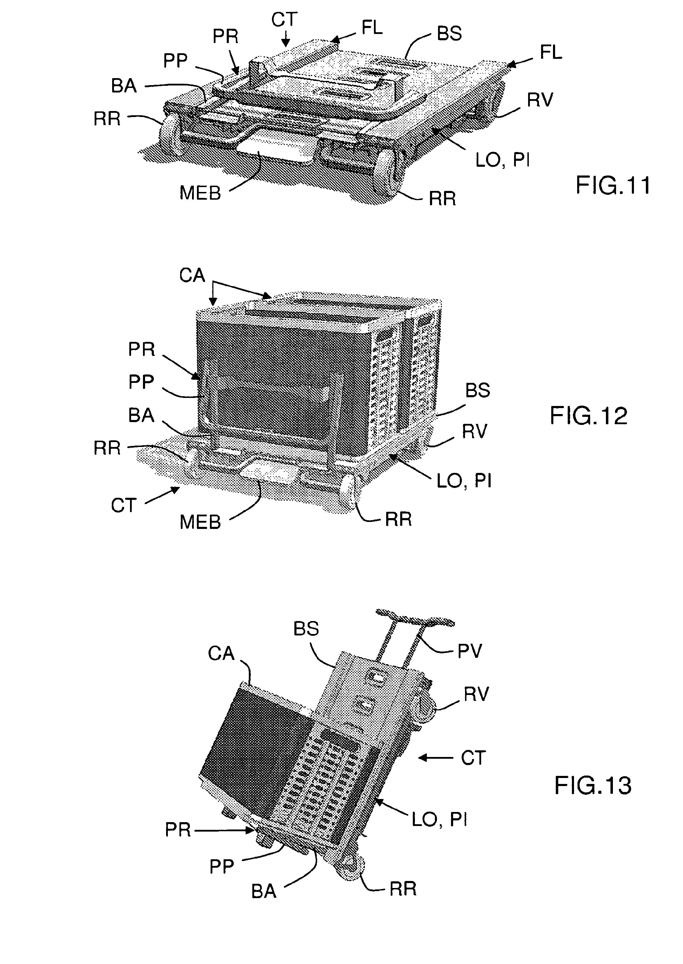

Comme illustré non limitativement, cette poignée arrière PR peut être montée à rotation sur la partie arrière de la base de support BS, notamment dans le but de pouvoir être rabattue pour réduire l'encombrement lorsque le chariot de transport CT est totalement replié (voir figure 11). Dans ce cas, et comme illustré, la poignée arrière PR peut par exemple comprendre, d'une part, deux barres BA, qui comportent chacune une extrémité inférieure, montée à rotation (éventuellement contrôlée par un mécanisme de verrouillage) sur la partie arrière de la base de support BS, et une extrémité supérieure, et d'autre part, une partie PP dédiée à la préhension, par exemple sensiblement en forme de U et de préférence montée à rotation (éventuellement contrôlée par un mécanisme de verrouillage) sur les extrémités supérieures des deux barres BA. Ainsi, la partie de préhension PP (escamotable) peut être positionnée entre environ - 180° et environ +90° par rapport aux barres BA.

Les notions d'inférieur et de supérieur sont ici considérées en référence à la direction verticale lorsque le chariot de transport CT est dans son état déployé (figures 1, 2 et 4) sur un plan sensiblement horizontal. De même, les notions d'avant et d'arrière sont ici considérées en référence aux parties avant et arrière du chariot de transport CT lorsque ce dernier (CT) est dans son état déployé (figures 1, 2 et 4).

Par ailleurs, et comme illustré non limitativement, la base de support BS comprend une poignée avant PV dans une partie avant opposée à sa partie arrière.

Comme illustré non limitativement sur les figures 1 et 13, cette poignée avant PV peut être montée à coulissement sur la partie avant de la base de support BS, notamment dans le but de pouvoir être placée soit dans une position rétractée (figure 1) dans laquelle elle n'est pas utilisée, soit dans une position déployée (figure 13) dans laquelle elle peut être tenue par la main d'une personne qui veut tirer ou pousser le chariot de transport CT, notamment lorsqu'il est transformé en diable.

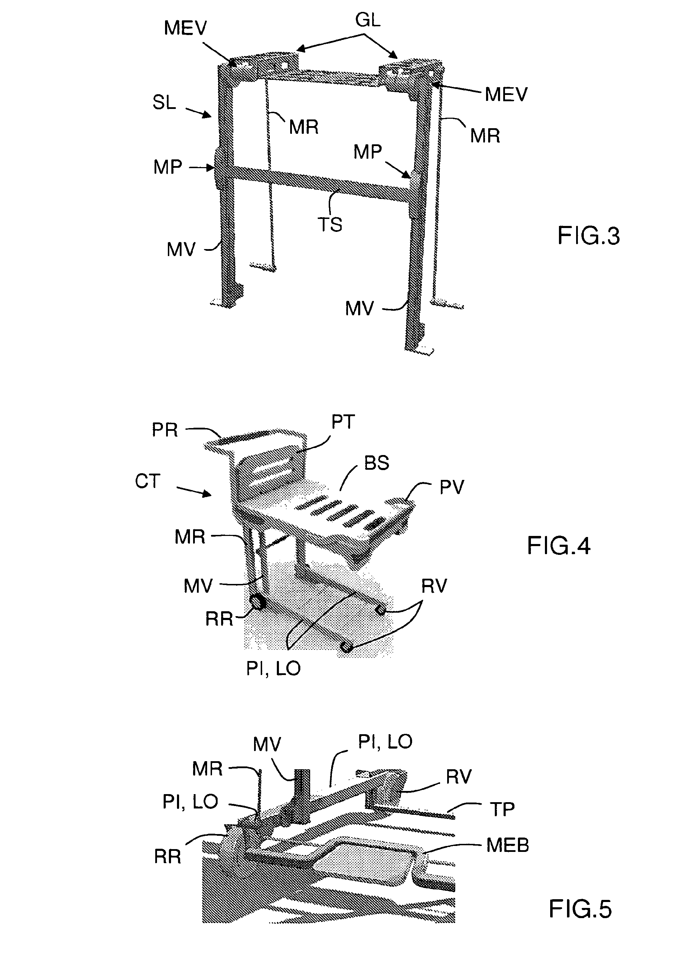

Dans une variante illustrée sur la figure 4, la poignée avant PV peut être montée à rotation (éventuellement de façon contrôlée par un mécanisme de verrouillage) sur la partie avant de la base de support BS, notamment dans le but de pouvoir être relevée pour que le chariot de transport CT puisse être tiré ou poussé, notamment lorsqu'il est transformé en diable.

On notera que la base de support BS peut également et éventuellement comprendre au moins un élément coulissant, comme par exemple un tiroir ou une tablette. Dans ce cas, l'élément coulissant peut être soit logé dans un logement défini dans l'épaisseur de la base de support BS en un endroit choisi, soit monté sur des rails ou glissières fixés sous la face inférieure de la base de support BS, laquelle est opposée à sa face supérieure destinée à recevoir les charges.

On notera également que la base de support BS peut également et éventuellement être agencée de manière à permettre la fixation sur sa face supérieure d'au moins un élément additionnel ou outil, comme par exemple un petit étau, en particulier lorsque son chariot de transport CT constitue un établi ou une table roulante. Lorsque le chariot de transport CT constitue un établi, il peut éventuellement comprendre un pied supplémentaire escamotable destiné à renforcer sa stabilité.

On notera également, comme illustré non limitativement sur les figures 4 et 6 à 10) que la base de support BS peut également et éventuellement comprendre dans sa partie arrière une plaque de retenue PT qui est montée sensiblement perpendiculairement à sa surface de support. Cette plaque de retenue PT sert à empêcher que des objets placés sur la face supérieure de la base de support BS ne tombent pendant le déplacement du chariot de transport CT. Elle peut également servir de surface de portage de charge(s) lorsque le chariot de transport CT est partiellement replié de manière à constituer un diable (la base de support BS servant alors principalement de surface d'appui pour cette (ces) charge(s)).

Les pieds (ou « skis ») PI du chariot de transport CT sont au nombre de deux. Chaque pied PI est muni d'au moins une roue avant RV et une roue arrière RR.

On entend ici par « roue avant » une roue qui est située du même côté que la partie avant de la base de support BS, et par « roue arrière » une roue qui est située du même côté que la partie arrière de la base de support BS.

De préférence, et comme illustré non limitativement, les roues avant RV sont de type directionnel (c'est-à-dire montées à rotation sur des cadres qui sont eux-mêmes montés à rotation libre sur les pieds PI), tandis que les roues arrière RR sont de type fixe (c'est-à-dire montées à rotation sur des cadres qui sont fixés sans degré de liberté sur les pieds PI). Dans ce cas, il est avantageux (bien que non obligatoire) que les roues arrière RR (fixes) présentent un diamètre sensiblement plus grand que celui des roues avant RV (directionnelles). On notera, d'une part, que les roues arrière peuvent être directionnelles, et d'autre part, que les roues arrière et avant peuvent être de même taille.

Par exemple, et comme illustré (voir figure 1), chaque pied PI comprend un longeron LO muni d'une extrémité arrière, sur laquelle est notamment montée à rotation l'une des roues arrière RR, et une extrémité avant, sur laquelle est montée à rotation l'une des roues avant RV. Dans ce cas, et comme illustré (voir figure 1), le chariot de transport CT comprend au moins une traverse TP munie d'extrémités opposées qui sont solidarisées aux deux longerons LO des pieds PI, de manière à définir une structure roulante rigide.

On notera, comme cela est illustré sur les figures 1, 2, 5, 11 et 12, que le chariot de transport CT peut également et éventuellement comprendre un mécanisme de blocage MEB agencé de manière à prendre au moins des première et seconde positions dans lesquelles respectivement il autorise et interdit la rotation des roues arrière RR. Ce mécanisme de blocage MEB peut par exemple comprendre un axe muni d'une part, d'une partie centrale conformée (par exemple en U) de manière à recevoir un plateau définissant une pédale pouvant être actionnée par le pied d'une personne, et d'autre part, de deux extrémités opposées montées à rotation sur les extrémités arrières des longerons LO des pieds PI sous une force de rappel et pourvues, pour l'une au moins d'entre elles, d'un patin de frein destiné à être plaqué contre une roue arrière RR pour bloquer sa rotation lorsque la pédale est actionnée (et donc entraîne l'axe en rotation). La pédale peut être également munie d'une tige venant s'engrener sur un pignon fixé sur l'axe de rotation d'une roue et destinée à bloquer ce pignon dans une position choisie en vue de bloquer la rotation de la roue.

On comprendra que dans la première position le(s) patin(s) de frein est (sont) éloigné(s) de la (des) roue(s) arrière RR et donc permet(tent) sa (leur) rotation, tandis que dans la seconde position le(s) patin(s) de frein est (sont) plaqué(s) étroitement contre la (des) roue(s) arrière RR et donc interdi(sen)t sa (leur) rotation et par conséquent le déplacement du chariot de transport CT.

Ce mécanisme de blocage MEB définit également une traverse complémentaire qui fait partie de la structure roulante et contribue à sa rigidité.

La structure de liaison SL du chariot de transport CT est montée à rotation sur la partie arrière des pieds PI (ici des deux longerons LO) et sur la partie arrière de la base de support BS. Elle comprend au moins deux montants arrière MR et deux montants avant MV.

On notera que, comme illustré, les deux montants arrière MR peuvent être sensiblement parallèles entre eux. De même, et comme illustré, les deux montants avant MV peuvent être sensiblement parallèles entre eux.

Ces montants MV et MR peuvent avoir des formes quelconques, éventuellement adaptées de manière à ne pas entrer en contact avec un élément externe, comme par exemple un pare-choc de voiture, ou avec un autre montant.

Chaque montant arrière MR comprend une extrémité inférieure, qui est montée à rotation sur un axe arrière à un premier niveau par rapport à la partie arrière de l'un des pieds PI (ici d'un longeron LO), et une extrémité supérieure, qui est montée à rotation sur un autre axe arrière à un premier niveau par rapport à la partie arrière de la base de support BS.

De même, chaque montant avant MV comprend une extrémité inférieure, qui est montée à rotation sur un axe avant à un second niveau, décalé vers l'avant par rapport au premier niveau, par rapport à la partie arrière de l'un des pieds PI (ici d'un longeron LO), et une extrémité supérieure, qui est montée à rotation sur un autre axe avant à un second niveau, décalé vers l'avant par rapport au premier niveau, par rapport à la partie arrière de la base de support BS.

Les deux axes arrière du montant arrière du côté droit du chariot de transport CT définissent avec les deux axes avant du montant avant associé sur ce même côté droit les quatre sommets (ou coins) d'un premier quadrilatère (éventuellement de type parallélogramme) à géométrie variable. De même, les deux axes arrière du montant arrière du côté gauche du chariot de transport CT définissent avec les deux axes avant du montant avant associé sur ce même côté gauche les quatre sommets (ou coins) d'un second quadrilatère (éventuellement de type parallélogramme) à géométrie variable.

Grâce à ce double montage à rotation, la structure de liaison SL peut être soit placée sensiblement verticalement (ou légèrement inclinée vers l'arrière (ou vers l'avant)) pour que le chariot de transport CT soit déployé (voir figures 1, 2 et 4), soit placée sensiblement à l'horizontal (c'est-à-dire redressée) dans le prolongement de la partie arrière de la base de support BS, puis translatée vers l'avant (ou rétractée) par coulissement sous la face inférieure de la base de support BS, après repliement des pieds PI contre elle.

Lorsque les pieds PI et la structure de liaison SL ont été redressés et rétractés, ils se retrouvent quasiment intégralement logés sous la face inférieure de la base de support BS, et donc le chariot de transport CT se retrouve dans un état au moins partiellement replié illustré sur la figure 12. Les roues avant RV se retrouvent alors de nouveau utilisables du côté de la partie avant de la base de support BS, et les roues arrière RR se retrouvent de nouveau utilisables du côté de la partie arrière de la base de support BS.

Le chariot de transport CT peut être ensuite placé dans un état totalement replié, illustré sur la figure 11, si l'on rabat sa poignée arrière PR contre la face supérieure de sa base de support BS. Il peut alors être stocké (ou entreposé) sans charge dans l'attente d'être utilisé.

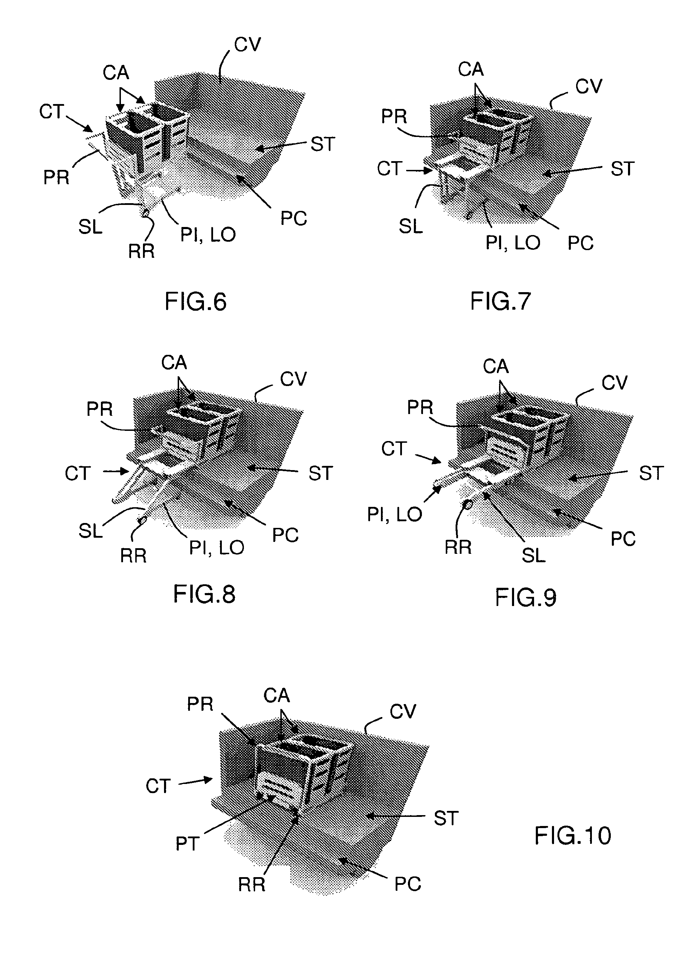

Le chariot de transport CT peut être également et éventuellement muni d'au moins une roulette installée sous la base de support BS (voir figure 4 sous la poignée avant PV). Chaque roulette est alors destinée à faciliter le glissement du chariot de transport CT sur une surface de stockage ST (voir figure 6). Les roulettes sont préférentiellement placées vers l'avant de la base de support BS, mais elles peuvent être également disposées ailleurs sous la base de support BS (par exemple dans une partie centrale ou dans une partie arrière). On peut par exemple prévoir de une à quatre roulettes. En présence de quatre roulettes deux d'entre elles peuvent être situées à l'avant et les deux autres à l'arrière (ou entre la partie centrale et l'arrière). On peut également prévoir deux roulettes à l'avant et un ou deux éléments d'appui fixes entre l'arrière et la partie centrale.

On notera, comme illustré non limitativement sur la figure 12, que lorsque le chariot de transport CT est placé dans son état partiellement replié (avec sa poignée arrière PR non rabattue), il peut transporter au moins une charge (éventuellement placée dans un casier CA) du fait que la surface de support de sa base de support BS est dégagée. La charge est alors supportée en position basse, alors qu'elle est supportée en position haute lorsque le chariot de transport CT est dans son état déployé (voir figures 1, 2 et 4).

On notera également, comme illustré sur la figure 13, que lorsque le chariot de transport CT est placé dans son état partiellement replié avec sa poignée avant PV déployée (ici translatée par coulissement) et sa poignée arrière PR non rabattue, il peut être utilisé en tant que diable. Dans ce cas, seules les roues arrière RR sont au contact du sol. La charge est alors supportée et retenue par la poignée arrière AR (et/ou l'éventuelle plaque transversale PT de la base de support BS).

Dans le premier exemple de réalisation illustré notamment sur les figures 1 à 3, les montants arrière MR sont agencés sous la forme de câbles tendus tandis que les montants avant MV sont agencés sous la forme de barres (ou poutres) rigides sensiblement parallèles. Dans ce cas, chaque montant arrière MR définit avec le montant avant MV, qui lui est associé sur le côté droit ou gauche du chariot de transport CT, deux côtés de l'un des deux quadrilatères dont la géométrie varie selon qu'il est en position sensiblement verticale (ou déployée - voir figues 1 et 2), intermédiaire (voir figure 8) ou rétractée (voir figures 11 à 13).

On notera qu'il est avantageux que le chariot de transport CT soit pourvu de deux tendeurs (non représentés) destinés respectivement à définir la tension des câbles MR. Ces tendeurs peuvent être par exemple installés à l'interface entre les extrémités inférieures des câbles MR et les parties arrière des longerons LO des pieds PI.

On notera également que les montants arrière MR peuvent être agencés sous la forme de tiges semi-rigides.

L'utilisation de câbles tendus ou de tiges semi-rigides permet avantageusement une rotation partielle des pieds PI et l'obtention d'une orientation non parallèle des pieds PI par rapport au plan défini par la base de support BS (lors d'une phase de gerbage du chariot de transport CT).

Dans le second exemple de réalisation illustré notamment sur la figure 4, les montants arrière MR et les montants avant MV sont agencés sous la forme de barres (ou poutres) rigides. Dans ce cas, chaque montant arrière MR définit avec le montant avant MV, qui lui est associé sur le côté droit ou gauche du chariot de transport CT, deux côtés d'un quadrilatère de type parallélogramme dont la géométrie varie selon qu'il est en position sensiblement verticale (ou déployée - voir figues 1, 6 et 7), intermédiaire (voir figure 8) ou rétractée (voir figures 9 et 10).

On notera qu'il est avantageux au moins dans le premier mode de réalisation que la structure de liaison SL comprenne au moins une traverse TS comportant deux extrémités opposées respectivement solidarisées aux deux montants avant MV. Cela permet en effet de renforcer la rigidité de la structure de liaison SL.

Afin de permettre le coulissement des pieds PI et de la structure de liaison SL sous la face inférieure de la base de support BS, cette dernière peut par exemple comprendre deux moyens de guidage GL (un sur chaque côté longitudinal (droit ou gauche)). Par exemple, et comme illustré sur la figure 1, ces deux moyens de guidage GL peuvent être définis respectivement dans deux flancs latéraux (ou longitudinaux) FL, sensiblement parallèles, de la base de support BS. Par exemple, chaque moyen de guidage GL est agencé sous la forme d'une glissière principale, définie par la conformation d'un flanc latéral FL (par exemple en U), et à l'intérieur de laquelle peuvent coulisser l'un des montants avant MV et/ou l'un des montants arrière MR associé une fois qu'ils ont été redressés dans le prolongement de la partie arrière de la base de support BS.

Comme illustré sur la figure 3, le coulissement d'un montant avant MV et/ou d'un montant arrière MR associé dans une glissière principale GP peut se faire au moyen d'une glissière auxiliaire GA qui est logée à coulissement à l'intérieur d'une glissière principale GL. Dans ce cas, les extrémités supérieures de l'un des montants avant MV et de l'un des montants arrière MR sont solidarisées, à rotation et à des premier et second niveaux différents (par rapport à la direction longitudinale (horizontale)), à une glissière auxiliaire GA. Ainsi, une fois que les pieds PI et la structure de liaison SL ont été redressés dans le prolongement de la partie arrière de la base de support BS on les translate vers l'avant, ce qui provoque la translation vers l'avant, par coulissement, des glissières auxiliaires GA dans les glissières principales GL.

Chaque quadrilatère (à géométrie variable) est donc ici défini par un montant avant MV, un montant arrière MR une glissière auxiliaire GA et une portion de l'extrémité arrière d'un longeron LO de l'un des pieds PI.

Comme illustré non limitativement sur les figures 1 et 3, afin d'éviter que la traverse TS de la structure de liaison SL et/ou les montants avant MV endommage(nt) une partie (par exemple le pare-choc arrière PC du système comportant la surface de stockage ST sur laquelle doit être déposé le chariot de transport CT une fois replié (au moins partiellement), il est avantageux de munir les montants avant MV et/ou la traverse TS de la structure de liaison SL de moyens de protection MP en au moins un endroit choisi de leur face avant. Ces moyens de protection MP peuvent être par exemple une gaine ou un élément rapporté(e), réalisé(e) dans un matériau antichoc non abrasif. On notera que l'on peut utiliser des roulettes à la place des moyens de protection MP.

Par ailleurs, et comme illustré non limitativement sur les figures 1 et 3, le chariot de transport CT peut comprendre un mécanisme de verrouillage MEV destiné à verrouiller la structure de liaison SL dans au moins deux positions. Dans une première position dite « position de circulation », le mécanisme de verrouillage MEV verrouille la structure de liaison SL sensiblement perpendiculairement (ou de façon très légèrement inclinée vers l'avant (angle aigu) par rapport) à la base de support BS. Dans cette position de circulation, le chariot de transport CT se trouve dans l'état déployé dans lequel il peut transporter des charges à une hauteur maximale prédéfinie par rapport à ses pieds PI.

Dans une seconde position dite « position intermédiaire », le mécanisme de verrouillage MEV verrouille la structure de liaison SL dans une position inclinée vers l'arrière par rapport à la base de support BS. Cette inclinaison se fait selon un angle qui est au minimum égal à 80°, et de préférence obtus (supérieur ou égal à 90°). Dans cette position intermédiaire, le chariot de transport CT se trouve également dans un état déployé, mais cette fois il ne peut transporter des charges qu'à une hauteur intermédiaire inférieure à la hauteur maximale précitée.

On notera, bien que cela ne soit pas illustré, que le chariot de transport CT peut également et éventuellement comprendre une structure de liaison auxiliaire, de préférence repliable. Cette structure de liaison auxiliaire comporte une extrémité inférieure, propre à être solidarisée à la traverse TP qui relie les deux longerons LO des pieds PI, et une extrémité supérieure, propre à contacter (voire être solidarisée à) la face inférieure de la base de support BS, afin de renforcer le support de cette dernière (BS). Cela évite en effet les portes à faux qui pourraient endommager le chariot de transport CT lorsqu'il transporte une charge importante placée du côté de la partie avant de sa base de support BS ou lorsqu'il est utilisé en tant qu'établi.

On va maintenant décrire les (5) principales étapes successives d'une opération de transfert d'un chariot de transport (du type de celui illustré sur la figure 4) sur une surface de stockage ST, en référence aux figures 6 à 10.

On considère ici, à titre d'exemple illustratif, que la surface de stockage ST est le plancher du coffre arrière CV d'une voiture de type break.

Dans une première étape illustrée sur la figure 6, on pousse (ou tire) le chariot de transport CT dans son état déployé avec ses charges (ici deux casiers CA), jusqu'à ce qu'il parvienne devant le coffre arrière CV (sa partie avant étant en regard du coffre arrière CV ouvert).

Dans une deuxième étape illustrée sur la figure 7, on déplace le chariot de transport CT vers le coffre arrière CV afin que sa base de support BS se retrouve placée pour sa plus grande partie au-dessus de la surface de stockage ST que constitue ici le plancher du coffre arrière CV. Le plancher ST se retrouve alors intercalé entre les pieds PI et la face inférieure de la base de support BS.

Dans une troisième étape illustrée sur la figure 8, on contraint la structure de liaison SL à faire un angle obtus par rapport à la base de support BS de sorte que la face inférieure de cette dernière parvienne au contact du plancher ST. Cela peut se faire en maintenant sensiblement immobile la base de support BS, tout en tirant légèrement vers l'arrière la structure de liaison SL. Cette inclinaison vers l'arrière de la structure de liaison SL contraint les pieds PI à reculer vers l'arrière, provoquant ainsi une diminution de leur inclinaison par rapport à la structure de liaison SL.

Dans une quatrième étape illustrée sur la figure 9, on redresse vers le haut la structure de liaison SL afin qu'elle soit placée dans le prolongement de la partie arrière de la base de support BS, et l'on redresse simultanément ou consécutivement les pieds PI afin qu'ils soient placés sensiblement parallèlement aux, et contre les, montants avant MV et arrière MR de la structure de liaison SL.

Dans une cinquième étape illustrée sur la figure 10, on translate (ou rétracte) la structure de liaison SL et les pieds PI vers l'avant, par coulissement, sous la face inférieure de la base de support BS, jusqu'à ce qu'ils parviennent en butée. Le chariot de transport CT est alors placé sur le plancher ST dans un état partiellement replié avec ses casiers CA. Afin de réduire son encombrement longitudinal il est possible de redresser vers le haut la partie de préhension PP de la poignée arrière PR qui était jusqu'alors orientée vers l'arrière.

Si l'on souhaite ultérieurement décharger le chariot de transport CT hors de la voiture, on effectue dans le sens inverse les cinq étapes décrites ci-avant. Une fois le chariot de transport CT revenu dans son état déployé, il est de nouveau prêt à circuler avec sa charge. On notera que si l'on veut faciliter l'opération de déchargement, on peut adjoindre au chariot de transport CT un mécanisme à vérin (par exemple à air) destiné à déclencher la translation automatique de la structure de liaison SL et des pieds PI vers l'arrière, ainsi qu'éventuellement le déploiement de ces derniers (SL, PI).

L'invention ne se limite pas aux modes de réalisation de chariot de transport décrits ci-avant, seulement à titre d'exemple, mais elle englobe toutes les variantes que pourra envisager l'homme de l'art dans le cadre des revendications ci-après.

## Revendications

1. Chariot de transport (CT), comprenant une base de support (BS) propre à supporter au moins une charge, des pieds (PI) munis chacun d'au moins une roue avant (RV) et une roue arrière (RR), et une structure de liaison (SL) montée à rotation sur une partie arrière desdits pieds (PI) et sur une partie arrière de ladite base de support (BS) et propre, une fois redressée, à être rétractée, par coulissement, sous ladite base de support (BS), ladite structure de liaison (SL) comprenant deux montants arrière (MR), comprenant des extrémités inférieure et supérieure montées à rotation sur des axes arrière à un premier niveau respectivement par rapport à la partie arrière desdits pieds (PI) et à la partie arrière de ladite base de support (BS), et deux montants avant (MV), comprenant des extrémités inférieure et supérieure montées à rotation sur des axes avant à un second niveau, décalé vers l'avant par rapport audit premier niveau, respectivement par rapport à la partie arrière desdits pieds (PI) et à la partie arrière de ladite base de support (BS), les axes arrière de chaque montant arrière (MR) définissant avec les axes avant du montant avant (MV) associé les sommets d'un quadrilatère à géométrie variable, **caractérisé en ce qu'**il comprend une poignée avant (PV) qui est solidarisée à une partie avant de ladite base de support (BS) et qui est déployable.

2. Chariot selon la revendication 1, **caractérisé en ce que** chaque pied (PI) comprend un longeron (LO) comportant une extrémité arrière, sur laquelle sont montées à rotation l'une desdites roues arrière (RR) et les extrémités inférieures de l'un des montants arrière (MR) et de l'un des montants avant (MV), et une extrémité avant, sur laquelle est montée à rotation l'une desdites roues avant (RV), et **en ce qu'**il comprend au moins une traverse (TP) munie d'extrémités opposées solidarisées auxdits longerons (LO).

3. Chariot selon l'une des revendications 1 à 2, **caractérisé en ce qu'**il comprend une poignée arrière (PR) solidarisée à une partie arrière de ladite base de support (BS).

4. Chariot selon l'une des revendications 1 à 3, **caractérisé en ce que** ladite base de support (BS) comprend au moins deux flancs latéraux (FL) sensiblement parallèles et munis chacun d'un moyen de guidage (GL) à l'intérieur duquel peuvent coulisser un montant avant (MV) et/ou un montant arrière (MR) une fois qu'ils ont été redressés dans le prolongement de la partie arrière de ladite base de support (BS).

5. Chariot selon la revendication 4, **caractérisé en ce que** chaque moyen de guidage (GL) est agencé sous la forme d'une glissière principale, et **en ce que** ladite structure de liaison (SL) comprend deux glissières auxiliaires (GA) agencées chacune de manière à coulisser à l'intérieur de l'une desdites glissières principales (GL), et à chacune desquelles sont solidarisées les extrémités supérieures de l'un desdits montants avant (MV) et de l'un desdits montants arrière (MR).

6. Chariot selon l'une des revendications 1 à 5, **caractérisé en ce que** lesdits montants arrière (MR) sont agencés sous la forme de câbles tendus ou de tiges semi-rigides et lesdits montants avant (MV) sont agencés sous la forme de barres rigides.

7. Chariot selon l'une des revendications 1 à 5, **caractérisé en ce que** lesdits montants arrière (MR) et avant (MV) sont agencés sous la forme de barres rigides.

8. Chariot selon l'une des revendications 1 à 7, **caractérisé en ce que** ladite structure de liaison (SL) comprend au moins une traverse (TS) comportant deux extrémités opposées respectivement solidarisées aux deux montants avant (MV).

9. Chariot selon l'une des revendications 1 à 8, **caractérisé en ce que** lesdits montants avant (MV) et/ou ladite traverse (TS) de la structure de liaison (SL) comprennent des moyens de protection (MP) en au moins un endroit choisi d'une face avant.

10. Chariot selon l'une des revendications 1 à 9, **caractérisé en ce que** ladite base de support (BS) est agencée sous la forme d'un plateau.

11. Chariot selon l'une des revendications 1 à 9, **caractérisé en ce que** ladite base de support (BS) est agencée sous la forme d'une poutre transversale aux extrémités opposées de laquelle sont montées deux poutres latérales de manière à définir sensiblement un berceau en forme de U propre à recevoir un réceptacle de charge.

12. Chariot selon l'une des revendications 1 à 11, **caractérisé en ce que** ladite base de support (BS) comprend au moins un élément coulissant choisi dans un groupe comprenant au moins un tiroir et une tablette.

13. Chariot selon l'une des revendications 1 à 12, **caractérisé en ce qu'**il comprend un mécanisme de blocage (MEB) agencé pour prendre au moins des première et seconde positions dans lesquelles respectivement il autorise et interdit la rotation desdites roues arrière (RR).

14. Chariot selon l'une des revendications 1 à 13, **caractérisé en ce qu'**il comprend un mécanisme de verrouillage (MEV) agencé pour prendre au moins des première et seconde positions dans lesquelles il verrouille ladite structure de liaison (SL) respectivement dans une position de circulation sensiblement perpendiculaire à ladite base de support (BS) et dans une position intermédiaire inclinée vers l'arrière d'un angle au moins égal à 80° par rapport à ladite base de support (BS).

## Patentansprüche

1. Transportwagen (CT), eine Grundplatte (BS) umfassend, die sich dazu eignet, zumindest eine Last zu tragen, Füße (PI), die jeweils mit zumindest einem Vorderrad (RV) und einem Hinterrad (RR) ausgestattet sind, und eine Verbindungsstruktur (SL), die drehend auf einem hinteren Abschnitt der besagten Füße (PI) und auf einem hinteren Abschnitt der besagten Grundplatte (BS) montiert ist, und sich dazu eignet, wenn sie aufgerichtet ist, durch Verschieben unter die besagte Grundplatte (BS) eingeschoben zu werden, wobei die besagte Verbindungsstruktur (SL) zwei hintere Ständer (MR) umfasst, die ein unteres und oberes Ende umfassen, die drehend auf den hinteren Achsen auf einem ersten Niveau jeweils im Verhältnis zum hinteren Abschnitt der besagten Füße (PI) und zum hinteren Abschnitt der besagten Grundplatte (BS) montiert sind, und zwei vordere Ständer (MV), die ein unteres und oberes Ende umfasst, die drehend auf den vorderen Achsen auf einem zweiten Niveau montiert sind, das im Verhältnis zum besagten ersten Niveau jeweils im Verhältnis zum hinteren Abschnitt der besagten Füße (PI) und zum hinteren Abschnitt der besagten Grundplatte (BS) nach vorne versetzt ist, wobei die hinteren Achsen eines jeden hinteren Ständers (MR) mit den vorderen Achsen des zugehörigen vorderen Ständers (MV) die Scheitelpunkte eines Vierecks mit variabler Geometrie bilden, **dadurch gekennzeichnet, dass** er einen vorderen Griff (PV) umfasst, der fest mit einem vorderen Abschnitt der besagten Grundplatte (BS) verbunden ist und ausgefahren werden kann.

2. Wagen nach Anspruch 1, **dadurch gekennzeichnet, dass** jeder Fuß (PI) einen Längsträger (LO) umfasst, der ein hinteres Ende enthält, auf dem eines der besagten Hinterräder (RR) drehend montiert ist, und die unteren Enden eines der hinteren Ständer (MR) und eines der vorderen Ständer (MV), und ein vorderes Ende, auf dem eines der besagten Vorderräder (RV) drehend montiert ist, und dadurch, dass er zumindest einen Querträger (TP) enthält, der mit gegenüberliegenden Enden versehen ist, die fest mit den besagten Längsträgern (LO) verbunden sind.

3. Wagen nach einem der Ansprüche 1 bis 2, **dadurch gekennzeichnet, dass** er einen hinteren Griff (PR) umfasst, der fest mit einem hinteren Abschnitt der besagten Grundplatte (BS) verbunden ist.

4. Wagen nach einem der Ansprüche 1 bis 3, **dadurch gekennzeichnet, dass** die besagte Grundplatte (BS) zumindest zwei Seitenflanken (FL) umfasst, die in etwa parallel sind und jeweils mit einem Führungsmittel (GL) versehen sind, in dessen Inneren ein vorderer Ständer (MV) und/ oder ein hinterer Ständer (MR) gleiten können, sobald sie in der Verlängerung des hinteren Abschnitts der besagten Grundplatte (BS) aufgerichtet sind.

5. Wagen nach Anspruch 4, **dadurch gekennzeichnet, dass** jedes Führungsmittel (GL) in Form einer Hauptgleitschiene angeordnet ist, und dadurch, dass die besagte Verbindungsstruktur (SL) zwei Hilfsgleitschienen (GA) umfasst, die jeweils angeordnet sind, um im Inneren der einen der besagten Hauptgleitschienen (GL) zu gleiten, und mit all denen jeweils die oberen Enden des einen der besagten vorderen Ständer (MV) und des einen der besagten hinteren Ständer (MR) fest verbunden sind.

6. Wagen nach einem der Ansprüche 1 bis 5, **dadurch gekennzeichnet, dass** die besagten hinteren Ständer (MR) in Form von gespannten Seilen oder halbsteifen Stangen angeordnet sind, und die besagten vorderen Ständer (MV) in Form von steifen Stäben angeordnet sind.

7. Wagen nach einem der Ansprüche 1 bis 5, **dadurch gekennzeichnet, dass** die besagten hinteren (MR) und vorderen (MV) Ständer in Form von steifen Stäben angeordnet sind.

8. Wagen nach einem der Ansprüche 1 bis 7, **dadurch gekennzeichnet, dass** die besagte Verbindungsstruktur (SL) zumindest einen Querträger (TS) umfasst, der zwei gegenüberliegende Enden enthält, die jeweils fest mit den beiden vorderen Ständern (MV) verbunden sind.

9. Wagen nach einem der Ansprüche 1 bis 8, **dadurch gekennzeichnet, dass** die besagten vorderen Ständer (MV) und/ oder der besagte Querträger (TS) der Verbindungsstruktur (SL) Schutzmittel (MP) an zumindest einer ausgewählten Stelle einer Vorderseite umfassen.

10. Wagen nach einem der Ansprüche 1 bis 9, **dadurch gekennzeichnet, dass** die besagte Grundplatte (BS) in Form eines Plateaus angeordnet ist.

11. Wagen nach einem der Ansprüche 1 bis 9, **dadurch gekennzeichnet, dass** die besagte Grundplatte (BS) in Form eines Querträgers angeordnet ist, an dessen gegenüberliegenden Enden zwei Seitenträger so montiert sind, um in etwa ein Traggestell in Form eines U zu bilden, das sich dazu eignet, einen Lastenbehälter aufzunehmen.

12. Wagen nach einem der Ansprüche 1 bis 11, **dadurch gekennzeichnet, dass** die besagte Grundplatte (BS) zumindest ein Gleitelement umfasst, das aus einer Gruppe ausgewählt wird, die zumindest eine Schublade und ein Bord umfasst.

13. Wagen nach einem der Ansprüche 1 bis 12, **dadurch gekennzeichnet, dass** er einen Blockiermechanismus (MEB) umfasst, der angeordnet ist, um zumindest eine erste und zweite Position einzunehmen, in denen er jeweils die Bewegung der besagten Hinterräder (RR) freigibt oder untersagt.

14. Wagen nach einem der Ansprüche 1 bis 13, **dadurch gekennzeichnet, dass** er einen Verriegelungsmechanismus (MEV) umfasst, der angeordnet ist, um zumindest eine erste und zweite Position einzunehmen, in denen er die besagte Verbindungsstruktur (SL) jeweils in einer Zirkulationsposition in etwa senkrecht zur besagten Grundplatte (BS) und in einer Zwischenposition verriegelt, die in einem Winkel von zumindest gleich 80° im Verhältnis zur besagten Grundplatte (BS) nach hinten geneigt ist.

## Claims

1. Transport trolley (CT), comprising a support base (BS) suitable for supporting at least one load, feet (PI) each provided with at least one front wheel (RV) and one rear wheel (RR), and a connecting structure (SL) rotatably mounted on a rear portion of said feet (PI) and on a rear portion of said support base (BS) and suitable, once straightened, for being retracted, by sliding, under said support base (BS), said connecting structure (SL) comprising two rear posts (MR), comprising lower and upper ends rotatably mounted on rear axles at a first level respectively relative to the rear portion of said feet (PI) and to the rear portion of said support base (BS), and two front posts (MV), comprising lower and upper ends rotatably mounted on front axles at a second level, shifted forwards relative to said first level, respectively relative to the rear portion of said feet (PI) and to the rear portion of said support base (BS), the rear axles of each rear post (MR) defining with the front axles of the associated front post (MV) the vertices of a variable geometry quadrilateral, **characterised in that** it comprises a front handle (PV) which is secured to a front portion of said support base (BS) and which is deployable.

2. Trolley as claimed in claim 1, **characterised in that** each foot (PI) comprises a longitudinal member (LO) comprising a rear end, whereon one of said rear wheels (RR) and the lower ends of one of the rear posts (MR) and of one of the front posts (MV) are rotatably mounted, and a front end, whereon one of said front wheels (RV) is rotatably mounted, and **in that** it comprises at least one cross member (TP) provided with opposite ends secured to said longitudinal members (LO).

3. Trolley as claimed in claims 1 to 2, **characterised in that** it comprises a rear handle (PR) secured to a rear portion of said support base (BS).

4. Trolley as claimed in any of claims 1 to 3, **characterised in that** said support base (BS) comprises at least substantially parallel lateral flanks (FL) each provided with guiding means (GL) wherein a front post (MV) and/or a rear port (MR) can slide once they have been straightened extending from the rear portion of said support base (BS).

5. Trolley as claimed in claim 4, **characterised in that** each guiding means (GL) is arranged in the form of a main slide, and **in that** said connecting structure (SL) comprises two auxiliary slides (GA) each arranged so as to slide inside one of said main slides (GL), and to each whereof the upper ends of one of said front posts (MV) and of one of said rear posts (MR) are secured.

6. Trolley as claimed in any of claims 1 to 5, **characterised in that** said rear posts (MR) are arranged in the form of tight cables or semi-rigid rods and said front posts (MV) are arranged in the form of rigid bars.

7. Trolley as claimed in any of claims 1 to 5, **characterised in that** said rear (MR) and front (MV) posts are arranged in the form of rigid bars.

8. Trolley as claimed in any of claims 1 to 7, **characterised in that** said connecting structure (SL) comprises at least one cross member (TS) comprising two opposite ends respectively secured to the two front posts (MV).

9. Trolley as claimed in any of claims 1 to 8, **characterised in that** said front posts (MV) and/or said cross member (TS) of the connecting structure (SL) comprise protection means (MP) in at least one chosen location of a front face.

10. Trolley as claimed in any of claims 1 to 9, **characterised in that** said support base (BS) is arranged in the from of a tray.

11. Trolley as claimed in any of claims 1 to 9, **characterised in that** said support base (BS) is arranged in the form of a transverse beam at the opposite ends whereof two lateral beams are mounted so as to define substantially a U-shaped cradle suitable for receiving a load receptacle.

12. Trolley as claimed in any of claims 1 to 11, **characterised in that** said support base (BS) comprises at least one sliding element chosen in a group comprising at least one drawer and one shelf.

13. Trolley as claimed in any of claims 1 to 12, **characterised in that** it comprises a blocking mechanism (MEB) arranged to adopt at least first and second positions wherein it allows and inhibits the rotation of said rear wheels (RR) respectively.

14. Trolley as claimed in any of claims 1 to 13, **characterised in that** it comprises a locking mechanism (MEV) arranged to adopt at least first and second positions wherein it locks said connecting structure (SL) respectively in a moving position substantially perpendicular to said support base (BS) and in an intermediate position inclined to the rear by an angle at least equal to 80° relative to said support base (BS).
